# EUROPEAN PATENT APPLICATION

(11) **EP 1 443 737 A1**
(43) Date of publication of application: **04.08.2004**
(21) Application number: 03028989.6
(22) Date of filing: 17.12.2003
(51) Int. Cl.: H04M 1/60, H04M 1/725

(54) **Headset comprising a wireless communication device communicating with at least two remote devices**

(30) Priority: 29.01.2003 JP 2003020390
(71) Applicant: Kabushiki Kaisha Toshiba, Tokyo (JP)
(72) Inventor: Nakasato, Shigemi, Tokyo 105-8001 (JP); Iwasaki, Junichi, Tokyo 105-8001 (JP); Tomoda, Ichiro, Tokyo 105-8001 (JP); Yamashita, Makoto, Tokyo 105-8001 (JP); Ide, Kenichi, Tokyo 105-8001 (JP); Ushimaru, Chikara, Tokyo 105-8001 (JP)
(74) Representative: Henkel, Feiler & Hänzel

(57) **Abstract**

An electronic apparatus (1) for communicating with first device and second device has a wireless communication device(113), a system control unit(111), a memory(112), an audio input unit(114), a mixer (115) and an audio and voice output unit (116) for establishing first wireless connection between the wireless communication device and the first device, and second wireless connection between the wireless communication device and the second device. The electronic apparatus (1) reproduces content data received through the first wireless connection. The second wireless connection is established while maintaining the first wireless connection when the wireless communication device receives a request to establish the second wireless connection from the second device while the reproducing apparatus is reproducing the content data.

## Description

This invention relates to an electronic apparatus having a wireless communication device that communicates with another wireless communication device, such as a headset.

In recent years, attention has been paid to Bluetooth@ as a wireless communication technique. Bluetooth@ is a short-distance wireless communication technique which is relatively low in cost and power consumption and which is suitable for mobile apparatus. This technique is used to interconnect various mobile information apparatus owned by individual users. Such apparatus are wirelessly connected together. Accordingly, they can be connected together freely, easily, and conveniently compared to conventional wired connections.

Japanese Patent Application Publication (KOKAI) No. 2002-112383 discloses a conventional type of mobile information apparatus utilizing wireless communication that wirelessly connects a portable music player and a headphone together.

In the case that a user listens to music with conventional wired connections, the user must connect a headphone or a headset provided with a microphone to the portable music player via a cable. Further, if the user would like to make a voice call, the user must connect the headset, provided with a speaker and a microphone, to a cellular telephone via the cable. Furthermore, when a voice signal needs to be processed by a notebook type personal computer, the user must connect the headset to the personal computer via the cable.

In contrast, wireless connections allow the user to immediately connect the headphone/headset to required apparatus without reconnecting the cable.

A technical specification for the Bluetooth® has been standardized. Consequently, when pieces of communication apparatus communicate with one another in conformity with the Bluetooth® standard, they may be connected together even if they are manufactured by different manufacturers.

The Bluetooth® standard is divided into a plurality of parts called "profiles" corresponding to the respective applications. The profiles relating to headsets are a Headset Profile (hereinafter "HSP"), an Advanced Audio Distribution Profile (hereinafter "A2DP"), and an Audio Remote Control Profile (hereinafter "AVRCP").

The HSP has a function of connecting a headset'to a telephone for a voice call. The A2DP has a function of connecting the headset to a portable music player to permit streaming reproduction of audio data. The AVRCP has a function of remotely controlling the portable music player.

Because a headphone/headset is small, the type of a user interface that may be provided therein is limited. For example, it is difficult to mount a display on the headphone/headset and the number of buttons or switches that can be mounted is limited. It is generally quite difficult to design a headphone/headset in which the user may operate controls mounted on the headphone/headset to select apparatus to be wirelessly connected to the headphone/headset or to control apparatuses to which the headphone/headset is connected.

One may consider, for example, the case in which a headset is provided with the A2DP and HSP profiles and is being used to reproduce music on the basis of the A2DP. Assume now that a cellular telephone receives a transmission, and the user wants to answer this call using the same headset thus requiring a voice call based on the HSP to be started. In this case, the connection target of the headset needs to be switched quickly. However, since the user interface is presently limited as described previously, there are no satisfactory methods of notifying the user of the transmission and of switching from the A2DP to the HSP.

Further, wireless communication based on Bluetooth® is carried out using a master-slave-type communication method. With this method, one piece of apparatus acts as a master to control communication with slave apparatus. Up to seven slaves can be simultaneously connected to the master apparatus. Only the master and each slave can be directly connected together but slaves cannot be connected directly to each other.

In general, a versatile apparatus such as a personal computer should be the master. On the other hand, a headset, a cellular telephone, and a human interface device such as a mouse, keyboard, or the like, are peripheral apparatus, which are connected to the master as slaves. In these circumstances, both the headset and the cellular telephone are slaves. Thus, with the master-slave-type communication method, while the headset is connected to the computer, the headset as a slave to the computer and may not be connected directly to the cellular telephone or serve as a direct slave to the telephone if a voice call is required.

The present invention is provided in view of these circumstances. It is an object of the present invention to provide electronic apparatus that enables wireless connections to be controlled without inconveniencing the user even if the user interface is limited.

To achieve the above object, the present invention provides an electronic apparatus for communicating with first device and second device, characterized by comprising: a wireless communication device; means for establishing first wireless connection between the wireless communication device and the first device, and second wireless connection between the wireless communication device and the second device; and means for reproducing content data received through the first wireless connection, wherein the establishing means establishes the second wireless connection while maintaining the first wireless connection in the case the wireless communication device receives a request to establish the second wireless connection from the second device while reproducing content data from the first device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a wireless communication system with a headset, a personal computer, and a cellular phone according to an embodiment of the present invention;
FIG. 2 is a block diagram showing a configuration of the headset in FIG. 1 in the embodiment;
FIG. 3 is a block diagram showing a configuration of the personal computer in FIG. 1 in the embodiment;
FIG. 4 is a block diagram showing a configuration of the cellular telephone in FIG. 1 in the embodiment;
FIG. 5 is a diagram illustrating connection control and audio adjustment both executed by the headset according to the embodiment; and
FIG. 6 is a flowchart showing the flow of connection control and audio adjustment both executed by the headset according to the embodiment.

Preferred embodiments according to the present invention will be described hereinafter with reference to the accompanying drawings.

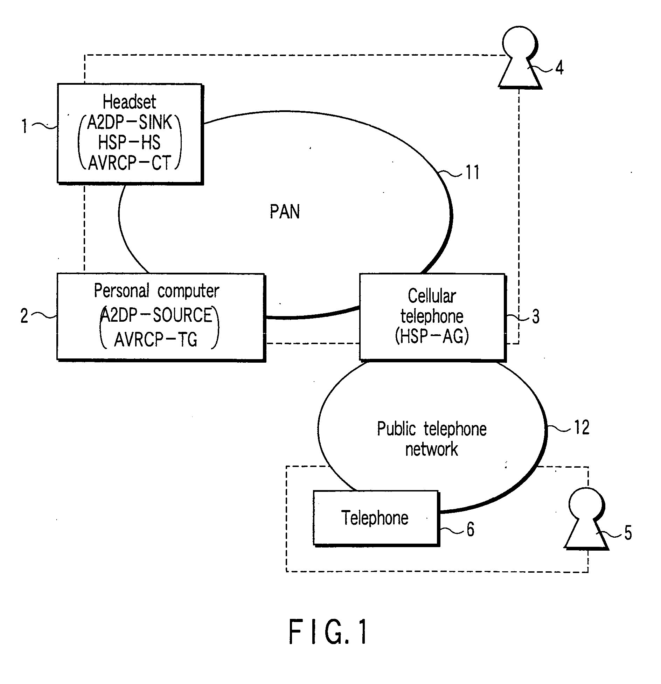

FIG. 1 shows a wireless communication system including a headset 1 as an electronic apparatus. The headset 1 has a wireless communication device, a speaker and a microphone.

The headset 1 carries out wireless communication in conformity with, for example, the Bluetooth® standard. The headset 1 may communicate with various pieces of apparatus each having a wireless communication device operating in conformity with the Bluetooth@ standard. The Bluetooth® standard uses a master-slave-type wireless communication method in which a master wirelessly communicates with slaves wirelessly connected to the master.

In this embodiment, the headset 1, serving as a master, carries out wireless communication with each of a personal computer 2 and a cellular telephone 3, wherein the personal computer 2 and cellular telephone 3 serve as slaves. The headset 1, the personal computer 2, and the cellular telephone 3 form a personal area network (hereinafter "PAN") 11 which is a wireless network.

The headset 1 has a SINK function of the A2DP profile, an HSP profile, and a CT function of the AVRCP profile.

The SINK function of the A2DP is the function used by a transfer target device to subject audio data such as music to streaming reproduction. The headset 1 using this function reproduces a stream of audio data transmitted using a wireless signal, while receiving the stream.

The HS function of the HSP is the function used to cooperate with the cellular telephone 3 in a voice call, and specifically, to transmit and receive a voice signal to and from the cellular telephone for a voice call.

The CT function of the AVRCP is the function used by a controlling device in remote control, and for transmitting a remote control signal to a controlled device using a wireless signal.

The personal computer 2 is a notebook type portable computer. The personal computer 2 has the SOURCE function of the A2DP and the TG function (described below) of the AVRCP.

The SOURCE function of the A2DP is the function used by a source device in streaming reproduction to transmit a stream of audio data using a wireless signal. The personal computer 2 has a music player installed therein as an application program. The music player carries out streaming transmission of music data through a wireless connection for the A2DP established between the personal computer 2 and the headset 1. The wireless connection is also called a Link.

The TG function of the AVRCP is the function used by a controlled device in remote control to, for example, start, stop, temporarily stop, or resume streaming reproduction on the basis of a remote control signal transmitted by the controlling device using a wireless signal.

Further, the cellular telephone 3 is a device that makes a voice call to a telephone 6 connected to the cellular telephone 3 via a public telephone network 12. The cellular telephone 3 has the AG function of the HSP in order to transmit and receive a voice signal to and from the headset 1 for a voice call. The AG function of the HSP is the function used to enable a voice call between the headset 1 and the telephone 6 via the cellular telephone 3. A user 5 uses the telephone 6. The user 4 uses the headset 1, personal computer 2 and cellular phone 3.

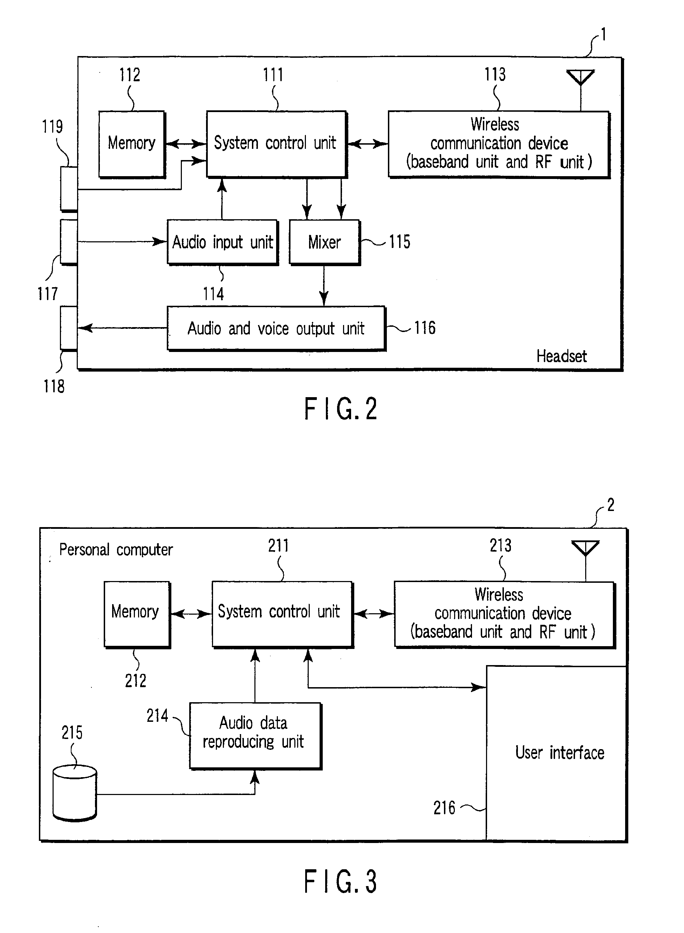

Now, with reference to FIGS. 2 to 4, the configurations of the headset 1, personal computer 2, and cellular telephone 3 will be described.

FIG. 2 shows a configuration of the headset 1. The headset 1 is worn on the head of user 4. The headset 1 has a system control unit 111 which is a processor provided to control operations of the headset 1.

The system control unit 111 connects a memory 112, a wireless communication device 113, an audio input unit 114, and a mixer 115. The audio input unit 114 connects to microphone 117. The mixer 115 connects to an audio and voice output unit 116 that is connected to a speaker 118. The system control unit 111 is further connected to an operation button 119.

The system control unit 111 executes programs stored in the memory 112 to control the wireless communication device 113, the audio input unit 114, the mixer 115.

The memory 112 is, for example, a nonvolatile memory device to store a program for controlling operations of the headset 1. This program contains a routine for causing the system control unit 111 to execute the SINK function of the A2DP, a routine for causing the system control unit 111 to execute the HS function of the HSP, and a routine for causing the system control unit 111 to execute the CT function of the AVRCP.

The wireless communication device 113 carries out wireless communication with the personal computer 2 or the cellular telephone 3 using a procedure in conformity with the Bluetooth@ standard. The wireless communication device 113 comprises a baseband processing unit and an RF unit. The wireless communication device 113 receives audio data such as music that is transmitted by the personal computer 2 using a wireless signal, and transmits a remote wireless signal to the personal computer 2 using a wireless signal. The wireless communication device 113 also transmits and receives a voice signal to and from the cellular telephone using a wireless signal.

The audio input unit 114 converts the voice of the user 4 inputted via the microphone 117 from an analog signal to a digital signal and then transmits the digital signal to the system control unit 111. Further, the mixer 115 is a circuit that mixes audio data such as music that is transmitted by the personal computer 2, with a voice signal transmitted by the cellular telephone 3.

The audio and voice output unit 116 executes a data reproducing process which may take the form of streaming reproduction. The audio and voice output unit 116 receives a stream of audio data such as music which is transmitted by the personal computer 2 via the wireless communication device 113, the system control unit 111, and the mixer 115, while converting the audio data into an electric signal that may be output from the speaker 118 as a sound.

Further, the audio and voice output unit 116 executes a process of outputting a voice signal transmitted by the cellular telephone 3, from the speaker 118 as a sound and a process of outputting a mixture of audio data obtained by the mixer 115 with a voice signal, as a sound

The audio and voice output unit 116 converts the audio data or voice signal from a digital signal into an analog signal. The audio and voice output unit 116 then transmits the resulting analog signal to the speaker 118.

FIG. 3 shows a configuration of the personal computer 2. Here, description will be given only of arrangements relating to communication with the headset 1.

The personal computer 2 has a system control unit 211 which is a processor provided to control operations of the personal computer 2. The system control unit 211 connects to a memory 212, a wireless communication device 213, an audio data reproducing unit 214 which is connected to a storage device 215, and a user interface 216.

The system control unit 211 executes a program stored in the memory 212 to control the wireless communication device 213, the audio data reproducing unit 214, and to control other devices and functions.

The memory 212 stores the program for controlling operations of the personal computer 2. This program contains a routine for causing the system control unit 211 to execute the SOURCE function of the A2DP, a routine for causing the system control unit 211 to execute the TG function of the AVRCP, and other routines.

The wireless communication device 213 carries out wireless communication with the headset 1 using a procedure in conformity with the Bluetooth® standard. The wireless communication device 213 includes a baseband processing unit and an RF unit. The wireless communication device 213 transmits a remote wireless signal to the headset 1 using a wireless signal and receives a remote control signal transmitted by headset 1 using a wireless signal.

The audio data reproducing unit 214 reads, from the storage device 214, a stream of audio data such as music to be subjected to streaming reproduction by the headset 1. The audio data reproducing unit 214 then transmits the read data to the system control unit 211.

The user interface 216 is composed of a display monitor, a keyboard, a pointing device, or the like. The user interface 216 allows the user 4 to, for example, select audio data to be reproduced and allow the user 4 to start or stop reproduction of audio data.

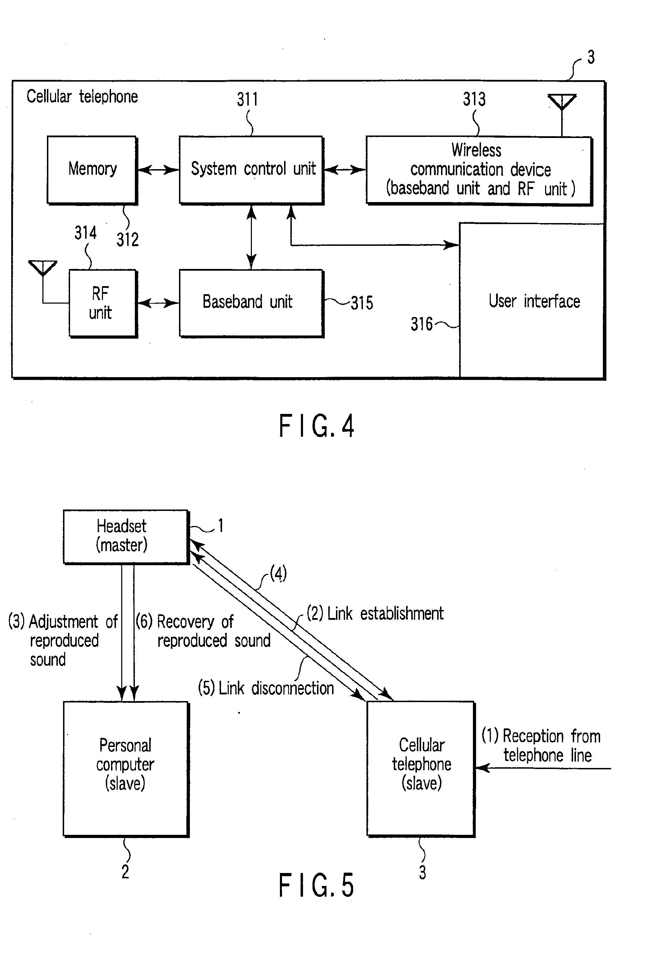

FIG. 4 shows a configuration of the cellular telephone 3.

The cellular telephone 3 has a system control unit 311 which is a processor provided to control operations of the cellular telephone 3.

The system control unit 311 connects to a memory 312, a wireless communication device 313, an RF section 314 through a baseband processing section 315, and a user interface 316.

The system control section 311 executes a program stored in the memory 312 to control the wireless communication device 313, the baseband processing section 315, and devices and functions.

The memory 312 is, for example, a nonvolatile memory device. The memory 312 stores a program for controlling operations of the cellular telephone 3. This program contains a routine for allowing the system control section 311 to execute the AG function of the HSP. Further, the memory 312 is also utilized as a reception history memory used to store the reception history of the cellular telephone 3.

The wireless communication device 313 carries out wireless communication with the headset 1 using a procedure in conformity with the Bluetooth® standard. The wireless communication device 313 contains a baseband processing section and an RF section. The wireless communication device 313 transmits and receives a voice signal to and from the headset 1 for a voice call, using a wireless signal.

The RF section 314 and the baseband processing section 315 are wireless communication devices used to enable a voice call between the cellular telephone 3 and the telephone 6. The RF section 314 and the baseband processing section 315 transmit and receive wireless signals to and from a base station. The user interface 316 is composed of, for example, a display and a group of various operation buttons.

With reference to FIG. 5, the is described how connection control and audio adjustment are both executed by the headset 1 to enable a quick shift to a voice call during reproduction of content data.

When the wireless connection between the headset 1 and personal computer 2 is established, the headset 1 enters an operation mode so that the headset 1 functions as a master. As a result, it is possible to quickly shift to a voice call during reproduction of content data. Since the headset 1 is a master, the personal computer 2 is wirelessly connected as a slave to the headset 1.

The setting and clearing of this mode are accomplished by operating the corresponding operation buttons 119 and are recorded in the memory 112. In the case that this mode is not set, the headset 1 is wirelessly connected the personal computer 2 as a slave.

The setting of the above mode in which the headset is the master causes the system control section 111 of the headset 1 to instruct the wireless communication device 113 to establish a wireless communication with the personal computer 2, while notifying the wireless communication device 113 that the headset 1 should function as a master. Thus, the personal computer 2 is wirelessly connected as a slave to the headset 1, and, as shown in FIG. 5, the headset 1 functions as a master.

Then, when the headset serves as the master, the headset 1 reproduces audio data transmitted by the personal computer 2, through an A2DP connection. Next, a description will be given below in reference to FIG. 5 of how the headset 1 shifts to a voice call during the reproduction of audio data.

In reference to FIG. 5, a discussion is first given in connection with events (1) and (2). Upon receiving a transmission from the telephone 6, i.e. upon being called from the telephone 6, the cellular telephone 3 attempts to establish a wireless connection with the headset 1. At this time, the headset 1 is functioning as a master, so that the cellular telephone 3 may be wirelessly connected to the headset 1 as a slave. That is, it is possible to establish a direct wireless communication between the headset 1 and the cellular telephone 3. Once this wireless connection is established between the headset being a master and the cellular telephone 3 being a slave, the cellular telephone 3 transmits a reception notification to the headset 1 through an HSP connection, indicating that it has received a transmission.

(3)(4): Upon receiving the reception notification from the cellular telephone 6, the headset 1 outputs, for example, a call notification sound from the speaker 118 to notify the user that it has received a transmission. When the user would like to receive the transmission and to talk with a person calling in, the user pushes, in response to this call notification sound, the corresponding operation button 119 to give an instruction to the personal computer 2 (through the AVRCP) to adjust the reproduction sound and an instruction to the cellular telephone 3 to connect the incoming call and start to talk, i.e., start the voice call. The headset 1, then, transmits a remote control signal to the personal computer 2 through an AVRCP connection to adjust a reproduced sound.

Here, the adjustment of a reproduced sound includes not only reducing the volume of the streaming audio so that it may serve as acceptable background music for the call, but also stopping or temporarily stopping transmission of a stream of audio data. In the case that the audio data transmission is stopped, user operation is simplified in that the user need not perform an operation of turning down the volume of music for a voice call as well as other operations. Further, the wireless connection established between the headset 1 and the personal computer 2 is still maintained. This enables a quick recovery after the voice call has been finished. Furthermore, by stopping or temporarily stopping the transmission of a stream of audio data, the corresponding band for wireless communication may be assigned to a voice call. Consequently, a higher quality voice call may be made.

Further, as a part of the adjustment of a reproduced sound, the headset 1 controls the mixer 115 so that the speaker 118 outputs a call notification sound which is louder than a sound reproduced from the audio data. This reproduced sound adjustment may be achieved in a number of ways as by increasing the volume of the call sound, reducing the volume of the sound reproduced from the audio data, or a mixture of these operations. After the reproduced sound adjustment has been completed, the headset 1 starts a voice call via the cellular telephone 3 through the HSP connection.

(5) (6): When the user 4 gives an instruction to end the voice call by pushing the corresponding operation button 119, the headset 1 clears the wireless connection between the headset 1 and the cellular telephone 3. Then, immediately after the disconnection, the headset 1 automatically transmits a remote control signal to the personal computer 2 through the AVRCP connection to recover the reproduced sound.

In this case, the recovery of the reproduced sound means, for example, the start of the transmission of the stream of audio data in the case the transmission was stopped during the adjustment of the reproduced sound or the resumption of the transmission in the case in which it was temporarily stopped during the adjustment of the reproduced sound. In the former case, the audio stream is transmitted starting with the beginning of the audio data. In the latter case of resumption, the stream is transmitted starting with the suspended position. In either case, it is unnecessary to execute a connection process for the establishment of wireless communication. Therefore, a quick recovery of audio data reproduction is carried out after a voice call. There is a third case also in which the sound of the audio data was reduced to serve as background music. In this case, the sound volume of the audio data is increased to a level prior to the call reception.

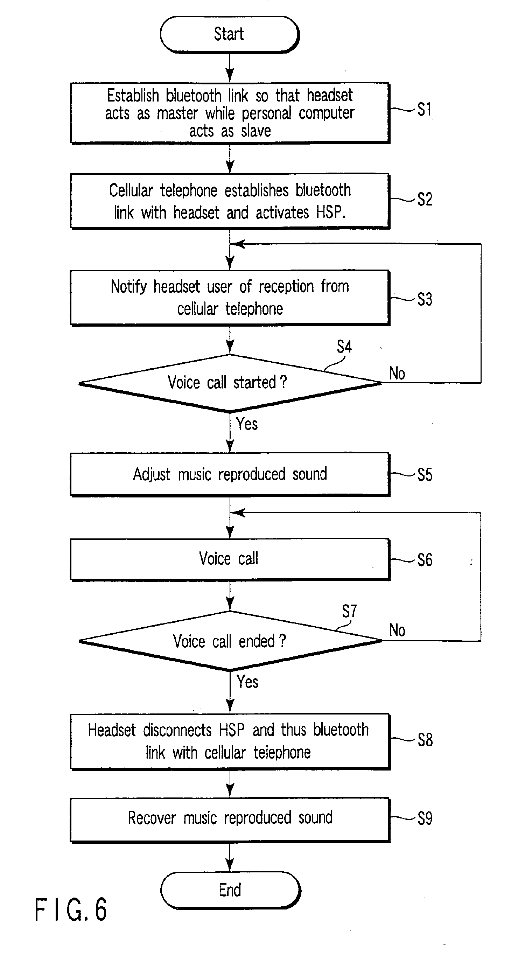

FIG. 6 is a flowchart showing the flow of connection control and audio adjustment both executed by the headset 1.

The headset 1 first executes a connection process so that the headset 1 functions as a master, while the personal computer 2 is wirelessly connected as a slave to the headset 1 (step S1). Then, in this connection form, the headset 1 reproduces audio data transmitted by the personal computer, through the A2DP connection. Subsequently, upon receiving a transmission from the telephone 6, the cellular telephone 3 establishes a wireless connection with the headset 1 being a master. At this connection, the cellular telephone 3 is slave. Then, the cellular telephone 3 activates the HSP connection to transmit a reception notification (step S2).

Upon receiving this reception notification, the headset 1 outputs a call notification sound or tone to notify the user 4 through the speaker 118 that the headset 1 has received the transmission from the cellular telephone 3. Generally, the call sound is louder than a music reproduced sound (step S3). When the user 4 gives an instruction to start a voice call by using the operation button 119 (YES in step S4), the headset 1 transmits a remote control signal to the personal computer 2 through the AVRCP connection for the adjustment of the reproduced sound, e.g. the stoppage of a stream transmission (step S5).

After the adjustment of the reproduced sound, the headset 1 makes a voice call through the HSP connection via the cellular telephone 3 (step S6). When an instruction to end the voice call is given by using the operation button 119 (YES in step S7), the headset 1 clears the HSP connection and thus the wireless connection established between the headset 1 and the cellular telephone 3 (step S8).

After the voice call has been ended, the headset 1 immediately transmits a remote control signal to the personal computer 2 through the AVRCP connection for the recovery of the reproduced sound, e.g. the start of the stream transmission (step S9).

As described above, according to the embodiment, if the headset 1 establishes a wireless connection between itself and the personal computer 2, a connection process is executed so that the headset functions as a master, while the personal computer 2 is wirelessly connected to the headset 1 functioning as a master. Thus, the headset 1 may be connected directly to the cellular telephone 3 from which the headset 1 has received a transmission.

Further, in this case, a music reproduced sound is automatically adjusted. This eliminates the need for the user to perform an operation of manually turning down the volume of the music reproduced sound as well as other operations.

Furthermore, Bluetooth® may take up to 10 seconds to establish a wireless connection owing to rules set forth in the protocol specification. However, the wireless connection established between the headset 1 and the personal computer 2 is maintained during a voice call. It is thus possible to immediately recover the reproduction of music after the voice call has been finished.

In the description of the previously described embodiment, the headset 1 carries out the adjustment and recovery of to the music reproduced sound by transmitting the remote control signal to the personal computer 2 through the AVRCP connection. However, the present invention is not to be limited to this structure. The adjustment and recovery of the music reproduced sound may be achieved by, for example, by controlling the mixer 115 to mute the music reproduced sound and to clear the muting without communication with the personal computer 2. In this case, the audio streaming will not be stopped at the personal computer 2, but will nevertheless not be heard at the headset. Upon canceling of the muting, the headset will resume reproduction of the streaming audio.

Further, in the description of the previously described embodiment, the wireless connection between the headset 1 and the cellular telephone 3 is established upon a reception. However, the wireless connection may be established beforehand so that the HSP connection may be activated upon a reception

An electronic apparatus according to the present invention is not to be limited to a headset. The invention may be embodied in other electronic apparatuses having a first function which may be interrupted by a second function. If such an electronic apparatus is relatively small and has only a little area on the body, this invention will be more effective.

## Claims

1. An electronic apparatus for communicating with first device and second device, **characterized by** comprising:
a wireless communication device (113);
means (111) for establishing first wireless connection between said wireless communication device and the first device, and second wireless connection between said wireless communication device and the second device; and
means (116) for reproducing content data received through the first wireless connection,
wherein said establishing means establishes the second wireless connection while maintaining the first wireless connection in the case said wireless communication device receives a request to establish the second wireless connection from the second device while reproducing content data from the first device.

2. The electronic apparatus according to claim 1, **characterized in that** the establishing means establishes the first wireless connection under a first condition in which said wireless communication device functions as a master.

3. The electronic apparatus according to claim 2, **characterized in that** the establishing means has means for setting the first wireless connection under a second condition other than the first condition.

4. The electronic apparatus according to claim 1, **characterized by** further comprising means (118) for outputting notification indicating that said wireless communicating device received a request to transmit a voice call from the second device.

5. The electronic apparatus according to claim 4, **characterized in that** said reproducing means includes a speaker which outputs a sound reproduced from the content data, and said outputting means makes said speaker output the notification with louder volume than that of the sound reproduced by said reproducing means.

6. The electronic apparatus according to claim 1, **characterized in that** said establishing means is further operative for establishing a wireless connection with said second device even though said second device has not requested a connection.

7. The electronic apparatus according to claim 4, **characterized by** further comprising means (119) for inputting an instruction to receive the voice call.

8. The electronic apparatus according to claim 1, **characterized by** further comprising means (111) for communicating with the second device using voice data through the second wireless connection.

9. The electronic apparatus according to claim 8, **characterized by** further comprising means (111) for adjusting a sound reproduced by said reproducing means while the communicating means is operating.

10. The electronic apparatus according to claim 9, **characterized in that** the adjusting means has means for sending to the first device a request for stopping transmitting the content data.

11. The electronic apparatus according to claim 9, **characterized in that** the adjusting means has means for muting the sound reproduced by said reproducing means.

12. A connection control method for an electronic apparatus that communicates with a first device and a second device, **characterized by** comprising the steps of:
establishing (S1) a first wireless connection between the electronic apparatus and the first device;
reproducing content data received through the first wireless connection; and
establishing (S2, S3, S4, S5, S6) a second wireless connection between the electronic apparatus and the second device while maintaining the first wireless connection in the case the electronic apparatus receives a request to establish the second wireless connection from the second device during the reproduction of the content data.
